# EUROPÄISCHE PATENTSCHRIFT

(11) **EP 2 959 995 B1**
(45) Veröffentlichungstag und Bekanntmachung des Hinweises auf die Patenterteilung: **30.09.2020**
(21) Anmeldenummer: 14173407.9
(22) Anmeldetag: 23.06.2014
(51) Int. Cl.: B23B 51/08, E04B 1/76, F16B 13/00

(54) **Montagewerkzeug und Verfahren zum vertieften Anordnen eines Dübeltellers**
Assembly tool and a method for arranging a recessed dowel plate
Outil de montage et procédé d'installation en retrait d'une rosace de cheville

(43) Veröffentlichungstag der Anmeldung: 30.12.2015
(73) Patentinhaber: EJOT Baubefestigungen GmbH, 57334 Bad Laasphe (DE)
(72) Erfinder: Knebel, Ulrich, 57319 Bad Berleburg-Berghausen (DE); Schneider, Marco, 35236 Breidenbach (DE); Weber, Dr. Jens O., 57250 Netphen (DE)
(74) Vertreter: Hohgardt, Martin

(56) Entgegenhaltungen:
- EP-A1- 2 740 851
- EP-A1- 2 740 947
- WO-A1-2014/011064
- DE-A1- 10 063 816

## Beschreibung

Die vorliegende Erfindung betrifft ein Montagewerkzeug gemäß dem Oberbegriff des Anspruchs 1 zum vertieften Anordnen eines Dübeltellers in einem Dämmstoff und gleichzeitigem Erstellen eines Bohrlochs in einem Untergrund, beispielsweise in einer Gebäudeaußenwand, sowie ein Verfahren gemäß dem Oberbegriff des Anspruchs 8. Ein solches Montagewerkzeug und ein solches Verfahren sind aus der DE 100 63 816 A1 bekannt.

Für die Befestigung von Dämmstoff an einem Untergrund werden sogenannte Dämmstoffhalter verwendet, die im Wesentlichen aus einem Dübelteller und einem Dübelschaft bestehen. Für die Montage wird zunächst eine Öffnung, die auch als Bohrloch bezeichnet wird, durch den Dämmstoff in dem Untergrund erstellt. Das Bohrloch wird in den meisten Fällen mittels eines Bohrhammers oder einer Schlagbohrmaschine erstellt, insbesondere wenn der Untergrund beispielsweise durch ein festes Mauerwerk oder Beton gebildet wird. Danach wird der Dämmstoffhalter in dem Bohrloch befestigt.

Zur Montage des Dämmstoffhalters sind aus dem Stand der Technik verschiedene Montagewerkzeuge bekannt. EP 2 639 374 A2 beschreibt beispielsweise ein Montagewerkzeug zum vertieften Anordnen eines Dübeltellers in einem Dämmstoff in dem sich bereits ein Bohrloch befindet. DE 100 63 816 A1 beschreibt ein Montagewerkzeug mit dem erst das Bohrloch erstellt und dann ein Dübel gesetzt wird.

Die im Stand der Technik bekannten Montagewerkzeuge und Verfahren haben allerdings den Nachteil, dass für die Montage des Dämmstoffhalters mehrere Arbeitsgänge notwendig sind, was den Arbeitsaufwand und die Kosten für die Montage von Wärmedämmverbund-Systemen unnötig in die Höhe treibt.

Die Aufgabe der vorliegenden Erfindung ist daher, ein Montagewerkzeug und ein entsprechendes Montageverfahren bereitzustellen, bei dem ein Dämmstoffhalter in dem Dämmstoff mittels weniger Arbeitsgänge einfach und schnell montiert werden kann.

Diese Aufgabe wird erfindungsgemäß durch das Montagewerkzeug gemäß Anspruch 1 und durch das Verfahren zum vertieften Anordnen eines Dübeltellers in einem Dämmstoff gemäß Anspruch 8 gelöst. Bevorzugte Ausführungsformen sind durch die abhängigen Ansprüche definiert.

Das erfindungsgemäße Montagewerkzeug zum vertieften Anordnen eines Dübeltellers in einem Dämmstoff und gleichzeitigem Erstellen eines Bohrlochs in einem Untergrund weist einen Antriebsstrang und ein Haltemittel auf.

Der Antriebsstrang weist an einem ersten Endbereich Mittel zum Verbinden mit einem Bohreinsatz auf. Mit Hilfe dieses Mittels kann der Antriebsstrang mit einem Bohreinsatz verbunden werden. Hierbei handelt es sich vorzugsweise um eine drehfeste Verbindung, d.h. ein Drehen des Antriebsstrangs bewirkt eine entsprechende Drehung des Bohreinsatzes. Das Mittel kann durch den Antriebsstrang selber oder durch ein zusätzliches Bauteil gebildet werden. In einer Ausführungsform sind der Antriebsstrang und der Bohreinsatz einstückig ausgestaltet. Der Bohreinsatz ist ein Werkzeug zum Bohren von Löchern. Der Bohreinsatz wird häufig auch kurz als Bohrer bezeichnet. In Abhängigkeit von dem Untergrund in dem ein Loch gebohrt werden soll, kann der Bohreinsatz aus anderen Materialien bestehen und eine andere räumliche Ausgestaltung aufweisen.

Der Antriebsstrang weist an einem zweiten Endbereich Mittel zum Verbinden mit einem Antriebswerkzeug auf. Beispiele für ein Antriebswerkzeug sind eine Schlagbohrmaschine oder ein Schlagbohrer. Das Mittel kann beispielsweise durch den Antriebsstrang selber gebildet werden. Es ist aber auch möglich, dass der Antriebsstrang an dem zweiten Endbereich ein zusätzliches Bauteil aufweist mit dessen Hilfe der Antriebsstrang mit dem Antriebswerkzeug verbunden werden kann. Das Haltemittel hält den Dübel derart, dass ein Drehen des Antriebsstrangs ein Drehen des Dübeltellers bewirkt. Das Haltemittel ist also ein Mittel, das die Drehung von dem Antriebsstrang an den Dübelteller überträgt. Das Haltemittel kann durch ein von dem Antriebsstrang separates Mittel gebildet werden. Im Rahmen der vorliegenden Erfindung kann das Haltemittel aber auch durch ein Mittel gebildet werden, dass einstückig an dem Antriebsstrang angeordnet ist.

Erfindungsgemäß ist das Haltemittel derart ausgestaltet, dass sich der Dübelteller axial zwischen einer ersten Position und einer zweiten Position relativ zu dem Antriebsstrang bewegen kann. Dabei kann der Dübelteller relativ zu dem Haltemittel und/oder das Haltemittel relativ zu dem Antriebsstrang bewegt werden.

Mit Hilfe des erfindungsgemäßen Montagewerkzeugs kann ein Dübelteller bereits beim Bohren des Bohrlochs in einem Dämmstoff vertieft angeordnet werden. Bei den im Stand der Technik beschriebenen Montagewerkzeugen muss zunächst ein Bohrloch durch den Dämmstoff in den Untergrund gebohrt werden. Danach erst wird der Dübelteller mittels des Montagewerkzeugs in dem Dämmstoff vertieft angeordnet. Bei der Verwendung des erfindungsgemäßen Montagewerkzeugs werden beide Schritte gleichzeitig durchgeführt, d.h. der Dübelteller wird während dem Bohren des Bohrlochs in den Dämmstoff vertieft angeordnet. Das vertiefte Anordnen des Dübeltellers wird durch geeignete Mittel an dem Dübelteller und/oder dem Montagewerkzeug ermöglicht.

Für das Bohren des Bohrlochs in einem festen Untergrund ist es meistens notwendig den Bohrer axial stoßweise, das bedeutet schlagend, bzw. meißelnd in den Untergrund zu bewegen. Deshalb wird ein Antriebswerkzeug, beispielsweise eine Schlagbohrmaschine oder einer Bohrhammer mit Hilfe der Mittel zum Verbinden an dem zweiten Endbereich des Antriebsstrangs mit dem Antriebsstrang verbunden und an dem ersten Endbereich des Antriebsstrangs der Antriebsstrang mit Hilfe des Mittels zum Verbinden mit einem Bohreinsatz verbunden, so dass die Schlag- bzw. Meißelbewegung eines Antriebswerkzeugs über den Antriebsstrangs an den Bohrer weitergegeben wird. Erfindungsgemäß weist das Montagewerkzeug ein Haltemittel zum Halten des Dübeltellers auf. Der Dübelteller wird von dem Halteteller derart gehalten, dass eine Drehung des Antriebsstrangs eine Drehung des Dübeltellers bewirkt. Außerdem ist das Haltemittel derart ausgestaltet ist, dass sich der Dübelteller axial zwischen einer ersten Position und einer zweiten Position relativ zu dem Antriebsstrang bewegen kann. Mit anderen Worten, eine Bewegung des Antriebsstrangs in axialer Richtung verursacht nicht notwendigerweise eine axiale Bewegung des Dübeltellers. Mit anderen Worten, in axialer Richtung, d.h. in Richtung der Längserstreckung des Antriebsstrangs ist die Bewegung des Antriebsstrangs von der Bewegung des Dübeltellers entkoppelt.

Ohne eine derartige axiale Entkoppelung wäre ein gleichmäßiges und kontrolliertes Einbringen des Dübeltellers in den Dämmstoff und des Erstellens eines Bohrlochs durch den Dämmstoff, in einen harten Untergrund, mit einer Schlagbohrmaschine in einem Arbeitsgang nicht möglich. In einem solchen Fall, das heißt ohne eine axiale Entkoppelung, würde sich der Dübelteller unkontrolliert mit den axialen Schlag-, beziehungsweise Meißelbewegungen des Antriebsstrangs in den Dämmstoff eindrücken und wieder lösen. Dadurch würde die Dämmstoffoberfläche wie auch der Dübelteller beschädigt werden.

Mit Hilfe des erfindungsgemäßen Montagewerkzeugs ist dies anders. Vor der Montage wird der Dämmstoff beispielsweise mittels einer Klebeverbindung an dem Untergrund, zum Beispiel an einer Hauswand befestigt. Dann kann mit Hilfe des erfindungsgemäßen Montagewerkzeugs an dessen ersten Endbereich ein Bohreinsatz, an dessen zweiten Endbereich an Antriebswerkzeug und an dessen Haltemittel ein Dübelteller angeordnet ist, ein Bohrloch in den Untergrund gebohrt werden und gleichzeitig der Dübelteller vertieft gesetzt werden. In einem Ausführungsbeispiel bewegt sich der Bohreinsatz des Montagewerkzeug zuerst durch das Dämmstoffmaterial bis der Untergrund erreicht wird. Da sich der Bohreinsatz immer wieder auf und ab bewegt, kann der Bohreinsatz auch in härtesten Materialien, wie beispielsweise armierter Beton, Naturstein, Klinker, uvm., die gewöhnlich als Untergrundmaterialien zum Einsatz kommen, ein Bohrloch bilden. Mit Hilfe des Haltemittels des erfindungsgemäßen Montagewerkzeugs wird die Drehbewegung des Antriebsstrangs auf den Dübelteller übertragen, um während des Bohrens des Bohrlochs auch eine Ausnehmung in dem Dämmstoff zu bilden. Hierfür können der Dübelteller und/oder das Montagewerkzeug geeignete Mittel aufweisen. Der Dübelteller kann beispielsweise Fräsmittel aufweisen, wie sie zum Beispiel in EP 2 042 666 B1 beschrieben sind. In einem anderen Beispiel weist der Dübelteller und/oder das Montagewerkzeug Schneidmittel auf, wie sie zum Beispiel in EP 1 318 250 A2 beschrieben sind. Durch die axiale Entkoppelung des Dübeltellers von dem Antriebsstrang bewegt sich der Dübelteller nicht wie der Antriebsstrang in kurzen Abständen immer wieder auf und ab, sondern kann kontinuierlich in den Dämmstoff bewegt werden. Dies ermöglicht, dass eine Ausnehmung in dem Dämmstoff gebildet werden kann, ohne diesen zu beschädigen.

Nachdem das Bohrloch und die Ausnehmung erstellt wurden, kann das Montagewerkzeug entfernt werden, wobei der Dübelteller in der Ausnehmung verbleibt. Danach kann in einem nächsten Arbeitsschritt ein Dübelschaft durch den Dübelteller in das Bohrloch gesteckt werden und durch das darauffolgende Einbringen eines Spreizelements in den Dübelschaft der untere Bereich des Dübelschafts aufgespreizt werden und somit den Dämmstoffhalter in dem Untergrund verankern. Als letzter Arbeitsschritt kann die Ausnehmung in der Dämmstoffoberfläche, in der sich der Dübelteller befindet, mit einer Dämmstoffrondelle verschlossen werden, um eine homogene Dämmstoffoberfläche herzustellen.

Erfindungsgemäß ist das Haltemittel an dem äußeren Umfang des Antriebsstrangs angeordnet. Vorteilhaft ermöglicht dies eine gleichförmige Rotationsbewegung mit dem Antriebsstrang, während des Montagevorgangs, so dass der an dem Haltemittel befindliche Dübelteller zentrisch über dem Bohrloch angeordnet werden kann. Beispielsweise kann das Haltemittel aus einer Hülse aus Plastik oder einem anderen Werkstoff bestehen, deren Innendurchmesser etwas größer ist als der Außendurchmesser des Bereichs des Antriebsstrangs, auf welchem sich das Haltemittel zwischen zwei Positionen bewegen kann.

Erfindungsgemäß weist das Montagewerkzeug ein Bewegungsmittel auf, das angepasst ist, um unter Einwirkung einer Kraft eine Bewegung des Dübeltellers von der ersten Position in eine zweite Position zuzulassen und bei Wegfall der einwirkenden Kraft eine Bewegung des Dübeltellers von der zweiten in die erste Position zu bewirken. Dies ermöglicht vorteilhaft eine axiale Bewegung des Dübeltellers zwischen der ersten und der zweiten Position, um somit die axialen Schlag- beziehungsweise Meißelbewegungen, die von dem Antriebswerkzeug auf den Antriebsstrang übertragen werden, auszugleichen. Gleichzeitig ermöglicht das Bewegungsmittel ein Rückstellen des Dübeltellers von der zweiten Position wieder in die erste Position bei Wegfall der einwirkenden Kraft, so dass der Dübelteller auf die Dämmstoffoberfläche gedrückt wird, um dadurch das Einschneiden, beziehungsweise das Einfräsen des Dübeltellers in den Dämmstoff durch die von dem Antriebswerkzeug ausgehende Rotationsbewegung zu ermöglichen. Für diesen Zweck ist das Bewegungsmittel zwischen dem Antriebsstrang und dem Haltemittel angeordnet sein, um somit eine Relativbewegung zwischen dem Antriebsstrang und dem Haltemittel zusammen mit dem von dem Haltemittel gehaltenen Dübelteller zu ermöglichen.

In einer bevorzugten Ausführungsform ist das Bewegungsmittel eine Feder. Die Bewegung des Dübeltellers von der ersten Position in die zweite Position kann somit gegen eine definierte Federkraft stattfinden und bei Wegfall der gegen die Federkraft gerichteten Kraft, wird durch die Federkraft die Bewegung zurück von der zweiten Position in die erste Position bewirkt. Beispielsweise kann dies eine Schraubenfeder sein, die an einem Ende mit der Antriebswelle verbunden ist, beispielsweise durch eine Schweißverbindung oder durch eine Lötverbindung. Alternativ kann ein Ende der Feder auch in einer Nut, bzw. Verjüngung, die sich um den Antriebsstrang erstreckt, angeordnet sein, um somit die Feder mit dem Antriebsstrang zu verbinden. Beispielsweise ist das zweite Ende der Feder mit dem Haltemittel verbunden. Dies kann mittels einer Klemmverbindung oder Klebeverbindung geschehen. Alternativ kann das Haltemittel auch nicht mit der Feder verbunden sein und wird erst unter Einwirkung einer Kraft mit der Feder in Verbindung gebracht. Grundsätzlich können das Haltemittel und das Bewegungsmittel auch einstückig ausgestaltet sein. So kann zum Beispiel eine das Bewegungsmittel bildende Feder derart ausgestaltet sein, dass sie auch die Funktion des Haltemittels übernimmt.

Durch die Federkraft kann der Dübelteller in einer Ruhe-Lage in der ersten Position gehalten werden. Der Abstand zwischen erster und zweiter Position kann beispielsweise in Abhängigkeit von der Höhe der Feder festgelegt werden. Alternativ kann auch jede andere Federart, wie Ringfeder, Evolutfeder verwendet werden oder anstelle einer Feder kann auch ein elastisches Kunststoffmaterial verwendet werden, um die Bewegung des Dübeltellers von der ersten Position in Richtung der zweiten Position unter Einwirkung einer definierten Kraft zu ermöglichen. Beispielsweise beträgt diese Kraft maximal wenige Newton, um den Dämmstoff nicht zu beschädigen.

In einer weiteren Alternative, in der das Haltemittel fest mit dem Antriebsstrang verbunden ist, kann die Feder zwischen dem Haltemittel und dem Dübelteller angeordnet sein, so dass die Bewegung des Dübeltellers von der ersten Position in die zweite Position gegen die definierte Federkraft stattfinden kann und bei Wegfall der gegen die Federkraft gerichteten Kraft, wird durch die Federkraft die Bewegung zurück von der zweiten Position in die erste Position bewirkt. Hierfür kann der Dübelteller axial beweglich, zwischen zumindest der ersten und der zweiten Position von dem Haltemittel gehalten werden.

In einer weiteren bevorzugten Ausführungsform ist das Haltemittel ausgestaltet den Dübelteller zumindest in Richtung quer zur Längsstreckung des Antriebsstrangs formschlüssig zu halten. Durch diese Verbindung kann der Dübelteller zumindest radial mit dem Haltemittel verbunden werden und somit können während des Montagevorgangs die Bewegungen von dem Haltemittel auf den Dübelteller übertragen werden.

In einer Ausführungsform wird das formschlüssige Halten durch mindestens einen Vorsprung an dem Umfang des Haltemittels und durch mindestens eine komplementäre Ausnehmung an dem Dübelteller ermöglicht. In einer anderen Ausführungsform wird das formschlüssige Halten durch mindestens eine Ausnehmung an dem Umfang des Haltemittels und durch mindestens einen komplementären Vorsprung an dem Dübelteller ermöglicht. Beispielsweise kann jede Geometrie verwendet werden, um ein formschlüssiges Halten zwischen den beiden Komponenten zu ermöglichen und sich durch eine Umkehr des Verbindungsvorgangs wieder trennen lassen, wie zum Beispiel einen am Umfang des Kopplungselements angebrachten Zahnkranz, der in komplementäre Ausnehmungen eingreift, die entlang der zentrischen Bohrung des Dübeltellers verlaufen. Auch können mehrere Zahnkränze mit einer Unterschiedlichen Länge und/oder Anzahl von Zähnen verwendet werden, um dadurch die Festigkeit der Verbindung zu erhöhen. Alternativ können die Zähne quadratisch, rechteckig oder dreieckig geformt sein. Zum Beispiel kann das Haltemittel auch konisch in Richtung des ersten Endbereichs zulaufen, so dass es in eine korrespondierende konische Ausnehmung in dem Dübelteller eingreifen kann. Auch können die oben beschriebenen Geometrien entlang des Antriebsstrangs mindestens so hoch sein, dass sie eine axiale Relativbewegung von Haltemittel und Dübelteller zwischen der ersten und der zweiten Position ermöglichen, während der Dübelteller radial feststehend mit dem Haltemittel verbunden ist.

In einer weiteren Ausführungsform verbindet das Mittel zum Verbinden mit einem Bohreinsatz einen Bohreinsatz drehfest mit dem Antriebswerkzeug. Dadurch können die axialen Bewegungen und die Drehbewegung des Antriebswerkzeugs über den Antriebsstrang auf den Bohrer übertragen werden. Beispielsweise kann das Mittel zum Verbinden eine Klemmverbindung sein, die den Bohreinsatz axial und radial zuverlässig mit dem Antriebsstrang koppelt. Alternativ hierzu kann der Antriebsstrang an seinem zweiten Ende auch fest, beziehungsweise nicht lösbar mit dem Bohreinsatz verbunden sein. Beispielsweise kann der Bohreinsatz ein Bohrer, wie zum Beispiel ein Steinbohrer sein. In einer weiteren Alternative kann das zweite Ende des Antriebsstrangs auch als Bohrer ausgeprägt sein.

In einer weiteren Ausführungsform versetzt das Antriebswerkzeug den Antriebsstrang radial gleichmäßig und axial stoßweise in Bewegung. Vorteilhaft wird hierdurch eine Bewegung des Bohreinsatzes durch harte Materialen ermöglicht. Beispielsweise kann dieses Antriebswerkzeug eine Schlagbohrmaschine sein, mit deren Hilfe die axialen und radialen Bewegungen auf den Antriebsstrang übertragen werden.

Im Folgenden werden das erfindungsgemäße Montagewerkzeug und das erfindungsgemäße Verfahren zum vertieften Anordnen eines Dübeltellers in einem Dämmstoff und gleichzeitigem Erstellen eines Bohrlochs in einem Untergrund beispielhaft anhand der in den nachfolgenden Figuren gezeigten Ausführungsformen näher erläutert. Es zeigen:
- Fig. 1a:: Ansicht einer beispielhaften Ausführungsform des erfindungsgemäßen Montagewerkzeugs.
- Fig. 1b:: Detailansicht einer beispielhaften Ausführungsform des erfindungsgemäßen Montagewerkzeugs mit einem daran befestigten Dübelteller.
- Fig. 2a, 2b, 2c:: Querschnitte der beispielhaften Ausführungsform des erfindungsgemäßen Montagewerkzeugs zusammen mit einem beispielhaften Dübelteller während des Montagevorgangs.

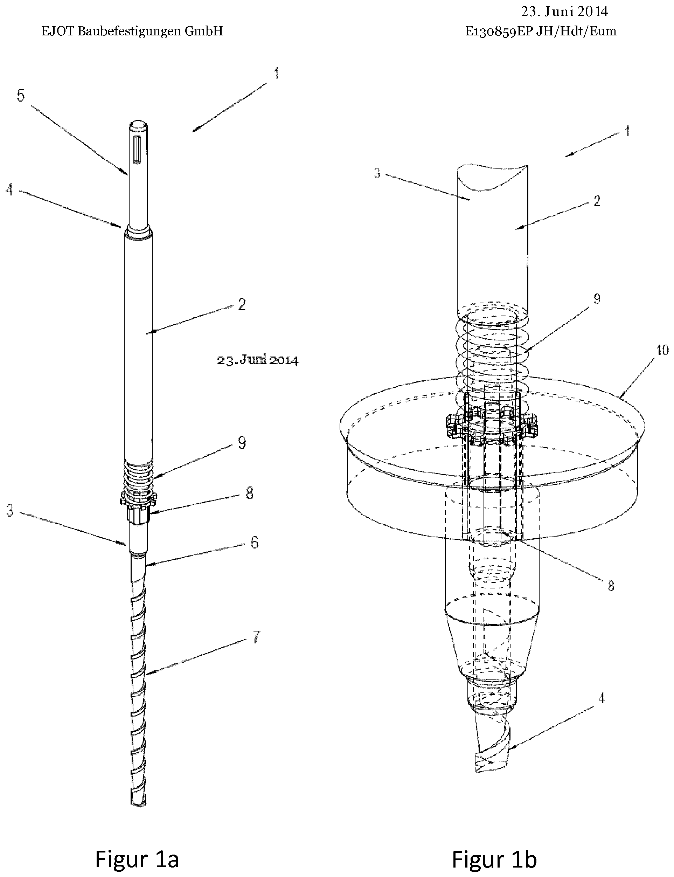

Figur 1a zeigt eine beispielhafte Ausführungsform des erfindungsgemäßen Montagewerkzeugs 1. Das Montagewerkzeug 1 besteht aus einem Antriebsstrang 2 mit einem ersten Endbereich 3 und einem zweiten Endbereich 4. Vorzugsweise besteht der Antriebsstrang 2 aus einer Metalllegierung, wie beispielsweise einer Chrom/Titan Legierung. An dem ersten Endbereich 3 befindet sich ein Mittel zum Verbinden 5 mit einem Antriebswerkzeug. Dieses kann beispielsweise durch Einkerbungen gebildet werden, wie sie zum Verbinden mit einem SDS, SDS plus, SDS Quick Bohrfutter einer Schlagbohrmaschine nötig sind. Alternativ hierzu kann das Mittel 5 auch aus einer glatten Oberfläche an dem ersten Endbereich 3 bestehen, so dass eine Verbindung mit einem Schnellspann-Bohrfutter ermöglicht werden kann. Beispielsweise kann der Antriebsstrang 2 auch ein Teil der Antriebswelle der Bohrmaschine sein. Mit Hilfe dieses Antriebswerkszeugs kann auf den Antriebsstrang 2 eine Rotationsbewegung und eine gleichzeitige axiale Hammer-, beziehungsweise Meißelbewegung übertragen werden, wie es bei Schlagbohrmaschinen typisch ist.

In Figur 1a ist auch eine beispielhafte Ausführungsform für das Mittel zum Verbinden 6 mit einem Bohreinsatz 7 dargestellt mit einem darin befindlichen Bohreinsatz 7. Dieses Mittel 6 kann beispielsweise so ausgestaltet sein, dass ein Bohrer hierin drehfest eingespannt oder eingeklemmt werden kann. Hierfür kann an dem ersten Endbereich 3, der dem Dämmstoff 12 zugewandt ist, ein Steinbohrer befestigt werden. Alternativ hierzu kann der erste Endbereich 3 des Antriebsstrangs 2 auch direkt als Bohrer 7 ausgestaltet sein. Beispielsweise kann der erste Endbereich 3 des Antriebstrangs 2 einen entsprechenden Schliff aufweisen und aus einer entsprechenden Metalllegierung bestehen. In einer weiteren Alternative kann auch der Antriebsstrang 2 der Schaft eines Bohrers 7 sein, an dem das Haltemittel 8 zumindest in Richtung quer zur Längserstreckung des Antriebsstrangs 2 den Dübelteller 10 formschlüssig hält.

Die in Figur 1a gezeigte Ausführungsform zeigt auch ein Haltemittel 8, das um den äußeren Umfang des Antriebsstrangs 2 angeordnet ist. In der gezeigten Ausführungsform ist das Haltemittel 8 hülsenartig ausgeprägt und weist an seinem Umfang mehrere senkrecht zur Längserstreckung des Antriebsstrangs abstehende Elemente auf, die sich für eine entsprechende Verbindung mit einem entsprechenden Dübelteller 10, wie in Figur 1b gezeigt wird, eignen. Der Fachmann kennt aber eine Vielzahl von Möglichkeiten, wie das Haltemittel 8 realisiert werden kann. Beispielsweise kann das Haltemittel 8 aus mehreren einzelnen Elementen bestehen, die um den Antriebsstrang 2 angeordnet sind und auch aus verschiedenen Materialen bestehen, wie beispielsweise aus Kunststoff und Metall, aber auch nur Kunststoff oder nur aus Metall. Beispielsweise kann auch die Position des Haltemittels 8 an dem Antriebsstrang 2 so gewählt werden, dass wenn der Bohreinsatz 7 den Untergrund 12 erreicht, der Dübelteller 10 in Kontakt mit dem Dämmstoff 11 kommt. Zum Beispiel kann auch die Position des Haltemittels 8 an dem Antriebsstrang 2 frei festlegbar sein, um somit das Montagewerkezug 1 für unterschiedliche Dämmstoffdicken einsetzen zu können.

Auch sind dem Fachmann verschiedene Möglichkeiten bekannt, wie eine Verbindung mit einem Dübelteller 10 hergestellt werden kann. Hierzu können unterschiedliche Geometrien zum Einsatz kommen, wie zum Beispiel, Dreiecke, Rechtecke, Parallelogramme. Auch kann beispielsweise nur eine Geometrie entlang des Umfangs des Haltemittels 8 angeordnet sein, anstatt einer Vielzahl dieser Geometrien. In der gezeigten Ausführungsform ist der Innendurchmesser des Haltemittels 8 etwas größer als der Außendurchmesser des Teils des Antriebsstrangs 2 auf dem das Haltemittel 8 angeordnet ist, so dass sich das Haltemittel 8 entlang des Antriebsstrangs 2 bewegen kann.

Figur 1a zeigt auch ein Beispiel für ein Bewegungsmittel 9, das den Weg von dem Haltemittel 8 von der ersten in die zweite Position dämpft. Hierbei kann es sich beispielsweise, wie in Figur 1a gezeigt wird, um eine Schraubenfeder handeln, die an einer Verdickung an dem Antriebsstrang 2 befestigt ist. Alternativ sind dem Fachmann auch weitere Befestigungsmöglichkeiten bekannt, wie beispielsweise das Befestigen eines Federendes in einer Nut oder das Anlöten, beziehungsweise Anschweißen eines Federendes an den Antriebsstrang 2. Das zweite Ende der Feder ist wie in Figur 1a gezeigt, mit dem Haltemittel 8 verbunden, so dass es entgegen der Federkraft von der ersten in die zweite Position bewegt werden kann und von der Federkraft von der zweiten Position wieder in die erste Position gedrückt wird, um somit die Schlag-, beziehungsweise Meißelbewegungen eines an dem Antriebsstrang 2 befestigten Antriebsmittel ausgleichen zu können.

Figur 1b zeigt eine Detailansicht einer beispielhaften Ausführungsform des erfindungsgemäßen Montagewerkzeugs 1 mit einem daran befestigten Dübelteller 10. In der in Figur 1b gezeigten Ausführungsform wird der Antriebsstrang 2 mit dem ersten Endbereich 3 voran durch die zentrische Öffnung in dem Dübelteller 10 gesteckt, um die formschlüssige Verbindung durch das Ineinandergreifen der mindestens einen formschlüssigen Vorsprung an dem Umfang des Haltemittels 8 und der mindestens einen komplementären Ausnehmung in der zentrischen Öffnung des Dübeltellers 10 zu bilden. Wie bereits bezüglich Figur 1a beschrieben wurde, kann das Haltemittel 8 auch mehrteilig ausgebildet sein. In dem in Figur 1b gezeigten Beispiel weist das Haltemittel 8 noch zusätzliche Vorsprünge an dem Umfang des, dem zweiten Endbereichs 4 des Antriebsstrangs 2 zugewandten, Endes des Haltemittels 8 auf, um somit wenn sich der Dübelteller 10 durch eine Rotationsbewegung in den Dämmstoff einschneidet eine zusätzliche mechanische Verbindung zwischen Haltemittel 8 und Dübelteller 10 bereit zu stellen.

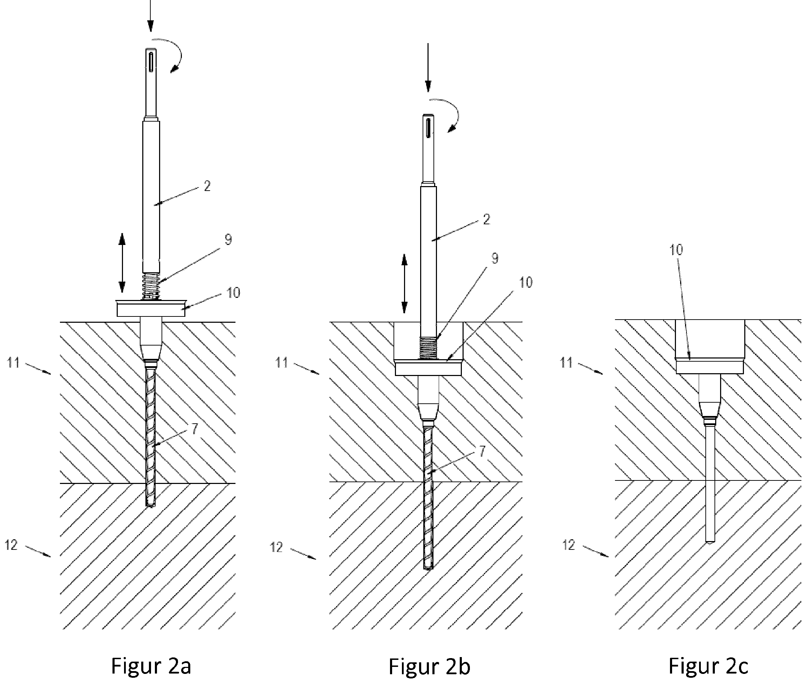

Die Figuren 2 zeigen Querschnittsansichten einer beispielhaften Ausführungsform des erfindungsgemäßen Montagewerkzeugs 1 zusammen mit einem Dübelteller 10 während des Montagevorgangs. In der in Figur 2a veranschaulichten Ausführungsform wird zuerst das Montagewerkzeug 1 mit einem daran angebrachten Dübelteller 10 in einem im Wesentlichen rechten Winkel zu der Dämmstoffoberfläche angeordnet. Durch die Rotationsbewegung des Antriebswerkzeugs schneidet sich der an dem ersten Endbereich 4 des Montagewerkzeugs 1 angebrachte Bohreinsatz 7 durch die Dämmstoffschicht 11. In der in Figur 2a gezeigten Ausführungsform greifen bereits Vorsprünge an dem Haltemittel 8 in korrespondierende Ausnehmungen des Dübeltellers 10 ein, um somit den Dübelteller 10 in eine Rotationsbewegung zu versetzen.

Wie es in der Figur 2b gezeigt wird, wird nachdem sich der Bohrer durch den Dämmstoff 11 vorgearbeitet hat der Untergrund 12, beispielsweise ein Betonuntergrund, erreicht. Während sich der Bohreinsatz 7 weiter durch die Rotationsbewegung des Bohreinsatzes 7 und der gleichzeitigen axialen Hammer-, beziehungsweise Meißelbewegung, die von dem Antriebswerkzeug auf den Antriebsstrang 2 übertragen wird, in den Untergrund 12 bewegt, schneidet sich der Dübelteller 10 gleichzeitig durch die Rotationsbewegung des Antriebstrangs 2 in den Dämmstoff 11 ein.

Dies kann beispielsweise mittels eines am Umfang des Dübeltellers 10 angeordneten Schneidemittels geschehen, durch das die Ausnehmung in dem Dämmstoff gebildet wird. Das Schneidmittel kann beispielsweise durch einen Schneidring gebildet werden, mit dem der Dämmstoff etwa am Umfang des Dübeltellers 10 eingeschnitten werden kann. Das dazwischenliegende Dämmstoffmaterial kann dann durch den Dübelteller 10 eingedrückt, das heißt komprimiert werden. Alternativ kann mit Hilfe des Schneidmittels das Dämmstoffmaterial unter dem Dübelteller 10 zumindest teilweise gelöst werden, was auch als Fräsen bezeichnet wird. Auch kann das Schneidmittel beispielsweise durch Rippen oder Spitzen gebildet werden und das gelöste Dämmstoffmaterial durch Öffnungen in der Oberfläche des Dübeltellers 10 in Richtung der Oberfläche des Dämmstoffs 11 abgeführt werden.

Wie in Figur 2b gezeigt wird, sind nun alle Vorsprünge an dem Haltemittel 8, wie auch die zusätzliche Vorsprünge an dem Umfang des dem ersten Endbereichs 3 des Antriebsstrangs 8 zugewandten Ende des Haltemittels 8, in die entsprechenden Ausnehmungen des Dübeltellers 10 eingebracht, um somit die formschlüssige Verbindung herzustellen. Während des Montagevorgangs kann die oben beschriebene federnde Aufhängung des Haltemittels 8 die axiale Hammer-, beziehungsweise Meißelbewegung, die von dem Antriebswerkzeug auf den Antriebsstrang 2 übertragen wird zu einem großen Teil ausgleichen, um somit ein sauberes Einbringen des Dübeltellers 10 in den Dämmstoff 11 zu ermöglichen.

Figur 2c, zeigt die Anordnung des Dübeltellers 10 nach dem Montagevorgang in dem Dämmstoff 11. Wie bereits oben beschrieben wurde, kann nachdem eine gewünschte Tiefe des Bohrlochs durch den Dämmstoff 11 und den Untergrund 12 erreicht wurde das Montagewerkzeug 1 entfernt werden. In der in den Figuren 2 gezeigten Ausführungsform geschieht dies durch ein Herausziehen des Montagewerkzeugs 1 aus dem Bohrloch, beziehungsweise aus dem Dübelteller 10. In einem nächsten Arbeitsschritt kann nun ein Dübelschaft durch den Dübelteller 10 in das Bohrloch gesteckt werden und durch das darauffolgende Einbringen eines Spreizelements in die Dübelhülse kann der untere Bereich des Dübelschafts aufgespreizt werden, um somit den Dämmstoffhalter in dem Untergrund 12 zu verankern.

## Patentansprüche

1. Montagewerkzeug (1) zum vertieften Anordnen eines Dübeltellers (10) in einem Dämmstoff (11) und gleichzeitigem Erstellen eines Bohrlochs in einem Untergrund (12), aufweisend:
einen Antriebsstrang (2), wobei der Antriebsstrang (2) an einem ersten Endbereich (3) Mittel zum Verbinden (6) mit einem Bohreinsatz zum Erstellen des Bohrlochs aufweist und an einem zweiten Endbereich (4) Mittel zum Verbinden (5) mit einem Antriebswerkzeug aufweist; und
ein Haltemittel (8) zum Halten des Dübeltellers (10), wobei das Haltemittel (8) an dem äußeren Umfang des Antriebsstrangs (2) angeordnet ist,
**dadurch gekennzeichnet, dass** das Haltemittel (8) derart angeordnet ist, dass beim Erstellen des Bohrlochs ein Drehen des Antriebsstrangs (2) ein Drehen des Dübeltellers (10) bewirkt, um eine Vertiefung in dem Dämmstoff (11) zu bilden, und
ein Bewegungsmittel (9), wobei das Bewegungsmittel zwischen dem Antriebsstrang (2) und dem Haltemittel (8) angeordnet ist und angepasst ist um unter Krafteinwirkung eine axiale Bewegung des Dübeltellers (10) von einer ersten Position in eine zweite Position relativ zu dem Antriebsstrang (2) zuzulassen und bei Wegfall der einwirkenden Kraft eine Bewegung des Dübeltellers (10) von der zweiten Position in die erste Position zu bewirken, um eine auf den Antriebsstrang (2) übertragene axiale Schlag- beziehungsweise Meißelbewegung auszugleichen, um ein sauberes Einbringen des Dübeltellers (10) in den Dämmstoff (11) zu ermöglichen.

2. Das Montagewerkzeug (1) nach Anspruch 1, wobei das Bewegungsmittel (9) eine Feder ist.

3. Das Montagewerkzeug (1) nach einem der Ansprüche 1 und 2, wobei das Haltemittel (8) ausgestaltet ist zumindest in Richtung quer zur Längserstreckung des Antriebsstrangs (2) den Dübelteller (10) formschlüssig zu halten.

4. Das Montagewerkzeug (1) nach Anspruch 3, wobei das formschlüssige Halten durch mindestens einen Vorsprung an dem Umfang des Haltemittels (8) für mindestens eine komplementäre Ausnehmung an dem Dübelteller (10) ermöglicht wird.

5. Das Montagewerkzeug (1) nach Anspruch 3, wobei das formschlüssige Halten durch mindestens eine Ausnehmung an dem Umfang des Haltemittels (8) für mindestens einen komplementären Vorsprung an dem Dübelteller (10) ermöglich wird.

6. Das Montagewerkzeug (1) nach einem der Ansprüche 1 bis 5, wobei das Mittel zum Verbinden (6) mit einem Bohreinsatz einen Bohreinsatz (7) drehfest mit dem Antriebsstrang (2) verbindet.

7. Das Montagewerkzeug (1) nach einem der Ansprüche 1 bis 6, wobei das Antriebswerkzeug den Antriebsstrang (2) radial gleichmäßig und axial stoßweise in Bewegung versetzt.

8. Ein Verfahren zum vertieften Anordnen eines Dübeltellers (10) in einem Dämmstoff (11) und gleichzeitigem Erstellen eines Bohrlochs in einem Untergrund (12), wobei das Verfahren die folgenden Schritte aufweist:
Vorwärtsbewegen eines mit einem ersten Ende eines Antriebsstrangs (2) verbundenen Bohreinsatzes (7) zur Erstellung des Bohrlochs mit Hilfe eines am zweiten Endbereich (4) des Antriebsstrangs (2) angeordneten Antriebswerkzeugs, und
gleichzeitiges Bilden einer Vertiefung in dem Dämmstoff (11), wobei der Dübelteller (10) mit Hilfe einer Drehbewegung des Antriebsstrangs (2) die Vertiefung in dem Dämmstoff (11) beim Erstellen des Bohrlochs bildet,
**dadurch gekennzeichnet, dass** sich der Dübelteller (10) während des Bildens der Vertiefung axial zwischen einer ersten Position und einer zweiten Position relativ zu dem Antriebsstrang (2) bewegen kann, um eine auf den Antriebsstrang (2) übertragene axiale Schlag- beziehungsweise Meißelbewegung auszugleichen, um ein sauberes Einbringen des Dübeltellers (10) in den Dämmstoff (11) zu ermöglichen.

## Claims

1. Assembly tool (1) for arranging a dowel plate (10) in a recess of an insulating material (11) and simultaneous making a drill hole in a substrate (12), comprising:
a drive section (2), wherein the drive section (2) comprises at a first end region (3) means for connecting (6) to a drill bit for making the drill hole and at a second end region (4) means for connecting (5) to a drive tool; and
a holding means (8) for holding the dowel plate (10), wherein the holding means (8) being arranged at the outer periphery of the drive section (2),
**characterized in that** the holding means (8) is arranged such that during making the drill hole, a rotation of the drive section (2) causes a rotation of the dowel plate (10) in order to form a recess in the insulating material (11), and
a moving means (9), wherein the moving means is arranged between the drive section (2) and the holding means (8) and is adapted when a force is applied to allow an axial movement of the dowel plate (10) from a first position to a second position relative to the drive section (2) and when the applied force is released to cause a movement of the dowel plate (10) from the second position to the first position in order to compensate an axial percussion or chisel movement transmitted to the drive section (2) in order to allow a clean insertion of the dowel plate (10) into the insulating material (11).

2. The assembly tool (1) according to claim 1, wherein the moving means (9) is a spring.

3. The assembly tool (1) according to any of claims 1 and 2, wherein the holding means (8) is designed to hold the dowel plate (10) form fit at least in a direction transverse to the longitudinal extension of the drive section (2).

4. The assembly tool (1) according to claim 3, wherein the form fit holding is enabled by at least one projection at the periphery of the holding means (8) for at least one complementary opening at the dowel plate (10).

5. The assembly tool (1) according to claim 3, wherein the form fit holding is enabled by at least one opening at the periphery of the holding means (8) for at least one complementary projection at the dowel plate (10).

6. The assembly tool (1) according to any of claims 1 to 5, wherein the means for connecting (6) to a drill bit, torque proof connects a drill bit (7) to the drive section (2).

7. The assembly tool (1) according to any of claims 1 to 6, wherein the drive tool causes that the drive section (2) is moved radially uniformly and axially intermittently.

8. A method for arranging a dowel plate (10) in a recess of an insulating material (11) and simultaneous making a drill hole in a substrate (12), wherein the method comprises the following steps:
forward moving of a drill bit (7) connected to a first end of a drive section (2) for making the drill hole by means of a drive tool arranged at a second end region (4) of the drive section (2), and
simultaneously forming a recess in the insulation material (11), wherein the dowel plate (10) forms the recess in the insulation material (11) by means of rotational movement of the drive section (2) during making the drill hole,
**characterized in that** the dowel plate (10) can move axially between a first position and a second position relative to the drive section (2) during the forming of the recess, in order to compensate an axial percussion or chisel movement transmitted to the drive section (2) in order to allow a clean insertion of the dowel plate (10) into the insulating material (11).

## Revendications

1. Outil de pose (1) pour l'installation encastrée d'un plateau de cheville (10) dans un matériau isolant (11) et pour la réalisation simultanée d'un trou dans un substrat (12), comprenant :
une chaîne cinématique (2), la chaîne cinématique (2) comportant, dans une première zone d'extrémité (3), des moyens de liaison (6) avec un insert de perçage pour réaliser le trou et comportant, dans une seconde zone d'extrémité (4), des moyens de liaison (5) avec un outil d'entraînement ; et
un moyen de retenue (8) pour retenir le plateau de cheville (10), le moyen de retenue (8) étant disposé sur la périphérie extérieure de la chaîne cinématique (2), **caractérisé en ce que** le moyen de retenue (8) est disposé de façon que, lors de la réalisation du trou, une rotation de la chaîne cinématique (2) provoque une rotation du plateau de cheville (10) afin de former une cavité dans le matériau isolant (11), et
un moyen de déplacement (9), le moyen de déplacement étant disposé entre la chaîne cinématique (2) et le moyen de retenue (8) et apte à autoriser, en cas d'action d'une force, un déplacement axial du plateau de cheville (10) d'une première position vers une seconde position par rapport à la chaîne cinématique (2) et, en cas de disparition de la force agissante, à provoquer un déplacement du plateau de cheville (10) de la seconde position vers la première position afin de compenser un mouvement axial de percussion, respectivement de burinage transmis à la chaîne cinématique (2) pour permettre une introduction propre du plateau de cheville (10) dans le matériau isolant (11) .

2. L'outil de montage (1) selon la revendication 1, le moyen de déplacement (9) étant un ressort.

3. L'outil de montage (1) selon une des revendications 1 et 2, le moyen de retenue (8) étant conçu pour retenir le plateau de cheville (10) par complémentarité de formes au moins dans la direction transversale à l'extension longitudinale de la chaîne cinématique (2).

4. L'outil de montage (1) selon la revendication 3, la retenue par complémentarité de formes étant permise par l'intermédiaire d'au moins une saillie sur la périphérie du moyen de retenue (8) pour au moins un évidement complémentaire sur le plateau de cheville (10) .

5. L'outil de montage (1) selon la revendication 3, la retenue par complémentarité de formes étant permise par l'intermédiaire d'au moins un évidement sur la périphérie du moyen de retenue (8) pour au moins une saillie complémentaire sur le plateau de cheville (10).

6. L'outil de montage (1) selon une des revendications 1 à 5, le moyen de liaison (6) avec un insert de perçage solidarisant un insert de perçage (7) en rotation à la chaîne cinématique (2).

7. L'outil de montage (1) selon une des revendications 1 à 6, l'outil d'entraînement mettant en mouvement la chaîne cinématique (2) radialement de manière uniforme et axialement par à-coups.

8. Un procédé pour l'installation encastrée d'un plateau de cheville (10) dans un matériau isolant (11) et pour la réalisation simultanée d'un trou dans un substrat (12), le procédé comprenant les étapes suivantes :
mouvement d'avancement d'un insert de perçage (7) relié à une première extrémité d'une chaîne cinématique (2) pour la réalisation du trou à l'aide d'un outil d'entraînement disposé dans la seconde zone d'extrémité (4) de la chaîne cinématique (2),
et formation simultanée d'une cavité dans le matériau isolant (11), le plateau de cheville (10) formant, à l'aide d'un mouvement de rotation de la chaîne cinématique (2), la cavité dans le matériau isolant (11) lors de la réalisation du trou, **caractérisé en ce que**, pendant la formation de la cavité, le plateau de cheville (10) peut se déplacer axialement entre une première position et une seconde position par rapport à la chaîne cinématique (2) afin de compenser un mouvement axial de percussion, respectivement de burinage transmis à la chaîne cinématique (2) pour permettre une introduction propre du plateau de cheville (10) dans le matériau isolant (11).
